# EUROPEAN PATENT SPECIFICATION

(11) **EP 2 264 353 B1**
(45) Date of publication and mention of the grant of the patent: **25.12.2013**
(21) Application number: 09008396.5
(22) Date of filing: 26.06.2009
(51) Int. Cl.: F16P 3/08, H01H 27/00

(54) **Handle safety switch assembly**
Griffschutzschalteranordnung
Assemblage d'interrupteur de sécurité à poignée

(30) Priority: 19.06.2009 IT VI20090148
(43) Date of publication of application: 22.12.2010
(73) Proprietor: Pizzato Elettrica S.r.l., 36063 Marostica (Vicenza) (IT)
(72) Inventor: Pizzato, Marco, 36063 Marostica (Vicenza) (IT); Zonta, Simone, 36061 Bassano D. Grappa (Vicenza) (IT)
(74) Representative: Maroscia, Antonio

(56) References cited:
- EP-A1- 1 942 512
- EP-A2- 0 598 235
- EP-A2- 1 826 472
- DE-U1- 29 717 313
- FR-A1- 2 839 191
- JP-A- 2006 140 040
- Pizzato Elettrica: "Safety handles P-Kube line" 2008, pages 1-7, XP002566086 Internet Retrieved from the Internet: URL:http://www.pizzato.it/PizzatoWeb/UserF iles/File/Pdf/Document/ZE_FGL07A08-ENG.pdf > [retrieved on 2010-01-29]

## Description

### Field of the invention

The present invention generally finds application in the field of electric safety systems and particularly relates to a handle safety switch assembly adapted to be mounted to accident-prevention doors or panels in safety barriers for industrial machines and equipment.

### Background art

Handle safety switches, which are designed to be fitted to safety barriers for industrial plants, are known to comprise a stationary member, or switch body, containing a pair of contacts connected to the power circuit of the plant and a second body, mounted to a movable part of the barrier and having an actuating member adapted to interact with the contacts for selectively opening/closing the circuit.

Thus, as the movable part, that may be a hinged or sliding door, is opened, it causes the actuating member to come out of the switch body and the circuit to open, thereby stopping the plant and allowing an operator to safely access the barrier protected area.

Typically, the switch body that is designed to be stably mounted to a stationary part of the barrier has a slot for receiving the actuating member.

The movable body usually has a hand grip, allowing it to be used as a handle. Therefore, the actuating member may be introduced into the switch body by rotating or sliding a movable portion thereof, which is integral with the actuating member and capable of sliding along a fixed guide on the door.

Certain known examples of such safety device are disclosed, for instance, by EP1826472 and W02006037306, in which the actuating member is introduced into the switch body by sliding the handle.

One drawback of these known solutions is that, when the actuating member is in its normal operating position, it is always exposed on at least two sides, whereby it is not protected from impacts against parts of the barrier or the switch body.

As a result, if the door is accidentally closed, serious damages may occur to the actuating member or other sensitive parts of the device.

JP2006140040 discloses a handle safety switch assembly having a slide with an actuating member projecting therefrom and a pair of appendixes which surrounds the actuating member with a longitudinal extension greater than the actuating member.

However, the appendixes do not protect the actuating member on both sides and this known assembly is still partially affected by the above drawback.

Other solutions, disclosed for instance in EP0900970 and DE4015797, solve at least part of this problem by providing an actuating member that is designed to be pulled out from a box-like body as the door is closed.

Nevertheless, these solutions still have a complex construction, which makes them less reliable. Furthermore, when the actuating member is in the maximum pull-out position, it is still unprotected and exposed to impact risks.

A further drawback that is found in all the above solutions is that the actuating member is guided in the slot of the switch body either by additional pin-shaped elements, or by the actuating member itself.

In the former case, further complication is added to the construction of the device, whereas in the latter there are higher risks of damages to the actuating member, which will be more exposed to impacts.

Finally, the above solutions do not generally have a symmetric structure, allowing them to be used on both right and left closing doors, unless special arrangements are provided, which add complexity to fabrication and assembly.

### Disclosure of the invention

The object of the present invention is to overcome the above drawbacks, by providing a handle safety switch assembly for use on safety barriers that has a simple and sturdy construction and provides relative cost effectiveness.

A particular object is to provide a switch assembly that can protect the actuating member from any accidental impact against other components of the assembly or parts of the barrier, while always ensuring accurate guidance of the components and maximum operation reliability.

Another object of the present invention is to provide a switch assembly that prevents any accidental movement of the handle due to the normal vibrations transmitted from the plant being served.

Yet another object is to provide a switch assembly that can be possibly actuated from within the barrier.

These and other objects, as more clearly explained hereafter, are fulfilled by a handle switch assembly as claimed in claim 1, comprising switch means designed to be mounted to the stationary part of a protection barrier and having a commutation circuit connectable to the power circuit of an industrial machine or plant, said switch means having a slot for access to said commutation circuit, actuation means comprising a slide and an actuating member projecting from said slide to a predetermined length in a longitudinal direction (L), said slide being designed to be slideably associated to the movable portion of the barrier for moving said actuating member in said longitudinal direction and allowing it to pass through said slot for interaction with said commutation circuit to open/close the latter.

The assembly is **characterized in that** the slide has a pair of shaped appendixes longitudinally projecting from opposite sides with respect of said actuating member and having corresponding longitudinal lengths greater than said predetermined length of said actuating member, to prevent any accidental contact of said actuating member with said switch means.

Guiding means are also provided, which are associated with at least one of said appendixes for aligning said actuating member with said slot with respect to said longitudinal direction.

With this peculiarity of the invention, the actuating member will be always protected from impacts both during the closing motion of the slide and when the door is accidentally closed, even with the slide in the maximum pull-out position.

The assembly will also have a particularly simple and sturdy structure, ensuring high reliability.

Advantageous embodiments of the assembly are defined by the dependent claims.

### Brief description of the drawings

Further characteristics and advantages of the invention will be more apparent upon reading the detailed description of a preferred, non-exclusive embodiment of an assembly according to the present invention, which is described as a non-limiting example with the help of the annexed drawings, in which:
FIG. 1 is a perspective view of a switch assembly of the invention mounted to a safety barrier in an open barrier position;
FIG. 2 is a perspective view of the assembly of Fig. 1 in its idle position;
FIG. 3 is an exploded perspective view of the assembly of Fig. 1;
FIG. 4 is a front view of the assembly of Fig. 1 in an intermediate position with the actuation element not yet introduced into the slot;
FIG. 5 is a front view of the assembly of Fig. 1 in its idle position;
FIG. 6 is a cross sectional view of the assembly of Fig. 4, as taken along a plane *VI - VI;*
FIG. 7 is an enlarged view of a detail of Fig. 6;
FIG. 8 is a cross sectional view of the assembly of Fig. 5, as taken along a plane *VIII - VIII;*
FIG. 9 is an enlarged view of a detail of Fig. 8;
FIG. 10 is an enlarged view of the detail of Figs. 7 and 9 with the slide fully pulled out and the actuating member not inserted and misaligned.

### Detailed description of a preferred embodiment

Referring to the above figures, a handle safety switch assembly of the invention, generally designated by numeral 1, may be mounted to a protective barrier that delimits a work zone possibly containing an industrial machine or plant, to limit or ensure safe access to such zone.

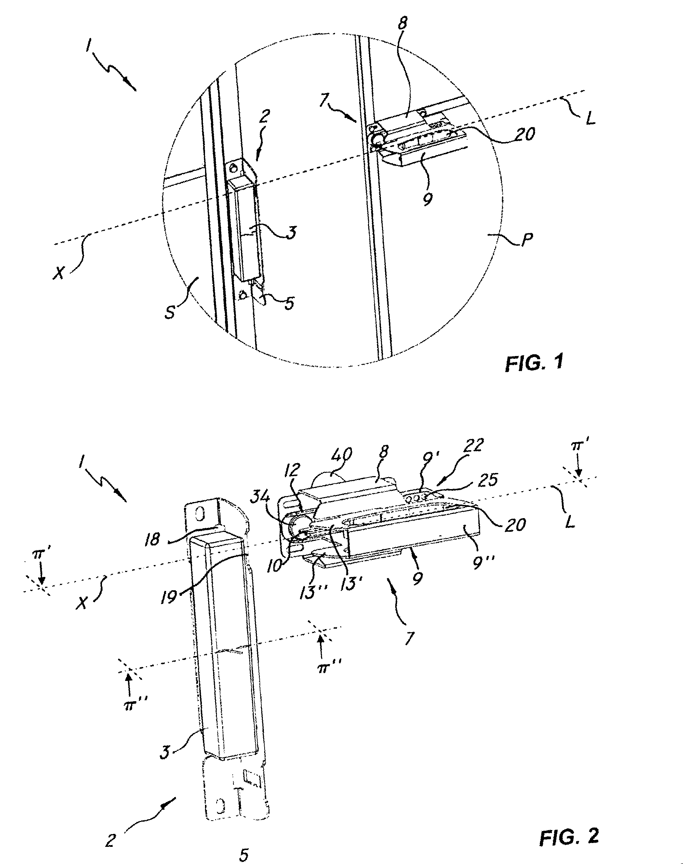

As shown in Fig. 1, a safety barrier, only partially shown herein, may be composed of a stationary part S and at least one movable part P, such as a movable door, to control accesses to the work zone.

The assembly 1 comprises switch means 2 designed to be stably mounted to the stationary portion S of the barrier and having a commutation circuit, not shown, connectable to the power circuit, also not shown, of the industrial machine or plant located in the working area.

The commutation circuit may be constructed in accordance with any scheme typically used for this type of applications, such as the one disclosed by patent EP0871188, by the applicant hereof, and will not be further described hereafter.

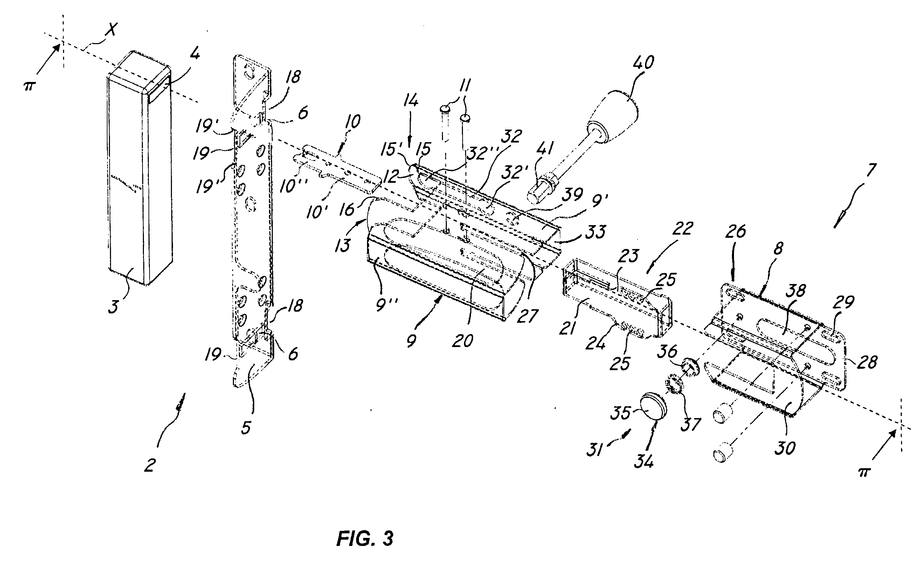

As more clearly shown in Figs. 2 and 3, the switch means 2 comprise a substantially prismatic box-like body 3 having a slot 4 for access to the commutation circuit.

The box-like body 3 also has a flange 5 allowing it to be secured to the barrier. Conveniently, the flange 5 will have a slot 6 coinciding with the slot 4 of the box-like body 3.

The assembly 1 further comprises actuation means 7 designed to be secured to the movable part P of the barrier to interact with the switch means 2 in response to the opening and closing motion of said movable part P and cause the machine or plant to stop or start, respectively.

The actuation means 7 may include a bracket 8, which is designed to be stably secured to the movable part P and has a prismatic slide 9 mounted thereon, equipped with an actuating member 10.

The latter may be shaped, without limitation, like a key, with an inner portion 10' for attachment to the slide 9, e.g. by pins or rivets 11, and an outer portion 10" projecting out of the slide 9 to a predetermined length in a longitudinal direction L.

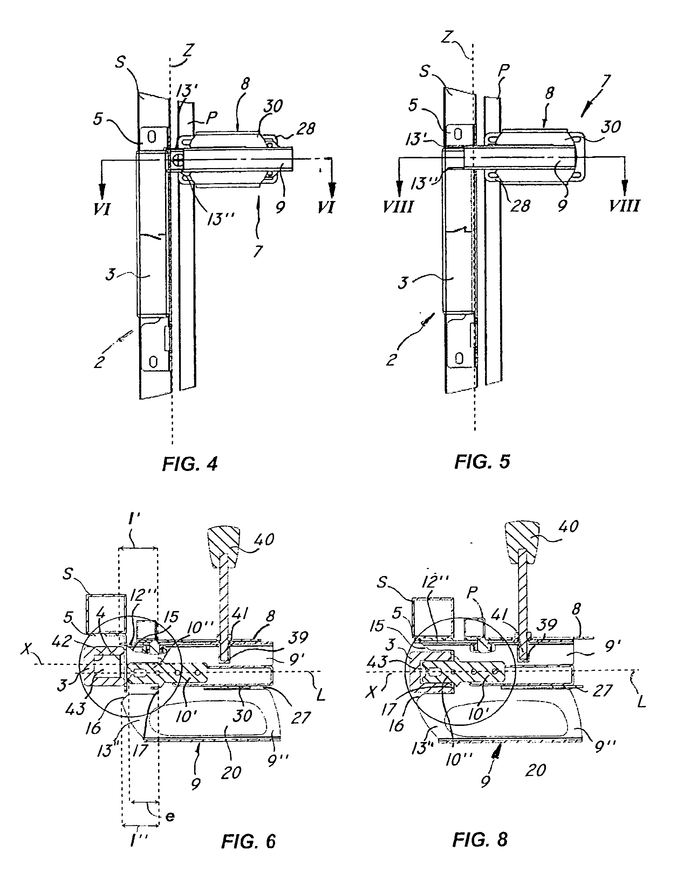

The slide 9 may be slideably mounted to the bracket 8, to move in the longitudinal direction L and transfer the actuator member 10 between an idle end position, in which it is pulled out of the box-like body 3, and an operating end position, as shown in Fig. 5.

In the latter position, the projecting portion 10" is at least partially inserted in the box-like body 3 through the slots 4 and 6, to interact with the commutation circuit and close the power circuit of the machine or plant.

In accordance with a peculiar characteristic of the invention, the slide 9 has a pair of shaped appendixes 12, 13 longitudinally projecting therefrom on opposite sides with respect to the longitudinal and vertical median plane π of the actuator member 10.

The appendixes 12, 13 have respective longitudinal lengths 1', 1" greater than the predetermined length e of the projecting portion 10" of the actuator member 10.

This will prevent any accidental contact of the actuator member 10 with the box-like body 3, the flange 5 or parts of the barrier when the movable part P is accidentally closed or the actuator member 10 slides.

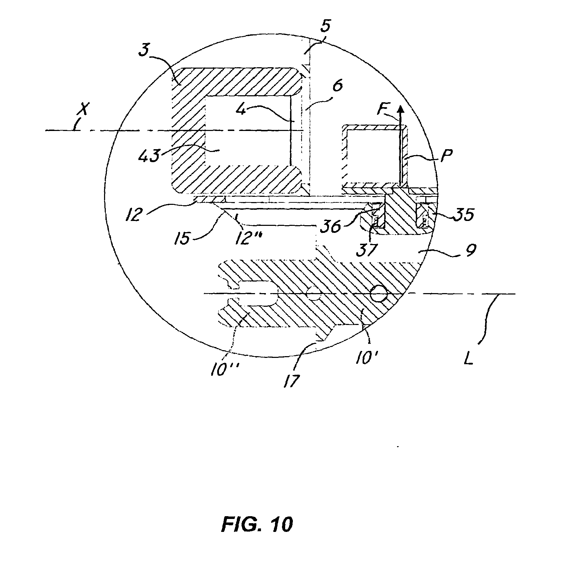

Particularly, protection of the actuator member 10 will be ensured both in case of a front impact in a transverse direction Y, due to an accidental or negligent closing motion of an overlapping door P, as more clearly shown in Fig. 10, and in the case of an impact caused by a longitudinal sliding motion of the door P or the slide 9 itself.

Advantageously, guiding means 14 are also provided, which are associated with at least one of the appendixes 12, 13 for guiding the actuating member 10 in at least one substantially transverse guiding direction Y and aligning it with the slot 4, with reference to the longitudinal direction L, during the motion from the idle position to the operating position.

In a particularly advantageous configuration, the guiding means 14 may include first substantially horizontal edges 15, 16 associated with respective longitudinal appendixes 12, 13.

The first edges 15, 16 may converge towards the actuator member 10 to define respective sliding planes inclined to a horizontal plane, with respect to the longitudinal direction L.

The first edges 15, 16 are susceptible of selectively and alternately interacting with the switch means 2, and particularly with the anchor flange 5.

As a result, the actuator member 10 will be moved in a first substantially transverse and horizontal alignment direction Y to fit into the box-like body 3 through the slot 4 and the slit 6 without hitting the box-like body 3 or the flange 5.

As shown in Fig. 3, a first appendix 12, located on the inner side of the slide 9 close to the door P, will have a substantially vertical extension, with a pair of substantially horizontal and vertically offset folds 12', 12".

Each of such folds 12', 12" will have one of first horizontal edges 15, each defining a sliding plane inclined at a predetermined angle to the longitudinal sliding direction L.

The other longitudinal appendix 13 may include two vertically offset plate-like formations 13', 13", also having first vertical edges 16 converging towards the actuator member 10 and inclined to the longitudinal direction L to define corresponding sliding planes.

The two longitudinal appendixes 12, 13 will be transversely separated by a transverse edge 17 which will define an abutment for the slide 9 against the anchor flange 5.

The latter will have first and second passages 18, 19 on opposite sides of the slot 6 in the first transverse direction Y.

Each of the passages 18, 19 is also designed to be longitudinally aligned with a corresponding appendix 12, 13 to interact with the sliding planes thereof and allow the actuator member 10 to be guided into the slot 4.

Particularly, a first passage 18, designed to interact with the first appendix 12 may be a substantially vertical elongated hole, whereas the second passage 19 will be an undercut formed at a vertical side of the flange 5.

Advantageously, at least one of the appendixes, particularly the first appendix 12, may have second substantially vertical edges 15' defining further sliding planes inclined to the vertical.

The second vertical edges 15' may selectively interact with one of the passages 18 of the flange 5 to guide the actuator member 10 in a second substantially transverse and vertical guiding direction Z.

The second passage 19 may in turn have a pair of third substantially vertical edges 19', converging towards the longitudinal sliding direction L to interact with the corresponding appendix 13 and promote the translational alignment motion of the actuator member 10 in the second transverse guiding direction Z.

Thus, the guiding means 14 allow alignment of the actuator member 10 with the slot 4 in both case of horizontal and vertical misalignment.

In the preferred configuration of the figures, that shall be intended without limitation to the invention, the slide 9 comprises an inner tubular portion 9', with the actuator member 10 held therein, and an outer tubular portion 9" having a catching opening 20 large enough to allow the introduction of a hand and the handling of said slide (9) by a user.

Advantageously, both tubular portions 9', 9" of the slide 9 may form a single body, that may be obtained from one tubular element made of metal or another material, possibly a polymeric or composite material of adequate strength.

The opening 20 may be obtained by directly removing material from the tubular element, to obtain a structure strong enough to allow firm grasp by the user and longitudinal transfer of the slide 9.

A prismatic block 21 may be also held in the slide 9, and caused to be integral with the inner tubular portion 9' by riveting, for supporting the actuator member 10.

The block 21 may be also designed to be associated with suitable locking means 22, for locking the slide 9 in the fully retracted idle end position, thereby preventing it from being slideably driven as a result of a negligent behavior of a user, or of an accidental event.

For instance, as shown in Figs. 2 and 3, the block 21 may have a pair of vertical ridges 23, 24, each having a plurality of longitudinally aligned holes 25.

When the slide 9 is in the idle end position, the holes 25 will project out of it thereby allowing the introduction of locks or other similar locking devices, not shown, which will prevent the slide 9 from sliding relative to the bracket 8.

Such arrangement is particularly useful to prevent the door P from being closed while an operator is still in the work zone.

Before entering the work zone, the operator shall simply introduce one or more locks in the holes 25 and hold the keys, to prevent the assembly 1 from being closed and the machine or plant from being started.

The slide 9 will be allowed to slide longitudinally relative to the bracket 8 by special guide means 26 associated both with the slide 9 and with the bracket 8, which may include a longitudinal groove 27 formed in the slide 9, to partially separate the two tubular portions 9', 9".

The anchor bracket 8 may also have a tubular shape, preferably formed from a single tubular metal piece, with a first vertical wall 28 designed to be secured to the door P via a plurality of slots 29 and a second vertical guide wall 30, substantially having a C shape, inserted in the groove 27, for the bracket 8 and the slide 9 to be joined together and to slide relative to each other.

Advantageously, the flange may be symmetrical to a substantially horizontal longitudinal plane π".

Likewise, the slide 9 and the bracket 8 may also have respective configurations substantially symmetrical with respect to a corresponding substantially horizontal longitudinal plane π'.

This will provide a fully reversible assembly, that may be mounted on either overlapping or sliding doors, either with left or right opening, without changing the parts of the assembly 1 or requiring further arrangements.

In yet another advantageous aspect of the invention, the assembly 1 comprises biasing elastic means 31 adapted to exert a substantially transverse biasing force F on the slide 9, which will be sufficient to avoid any accidental sliding thereof between the end positions.

Particularly, the biasing means 31 will have the purpose of preventing the slide 9 from sliding due to vibrations or other minor accidental stresses transmitted to the slide 9 through the barrier, without preventing it from being employed by the user as a handle.

The biasing means 31 also allow vertical mounting of the assembly 1, while preventing any undesired release of the actuator member 10.

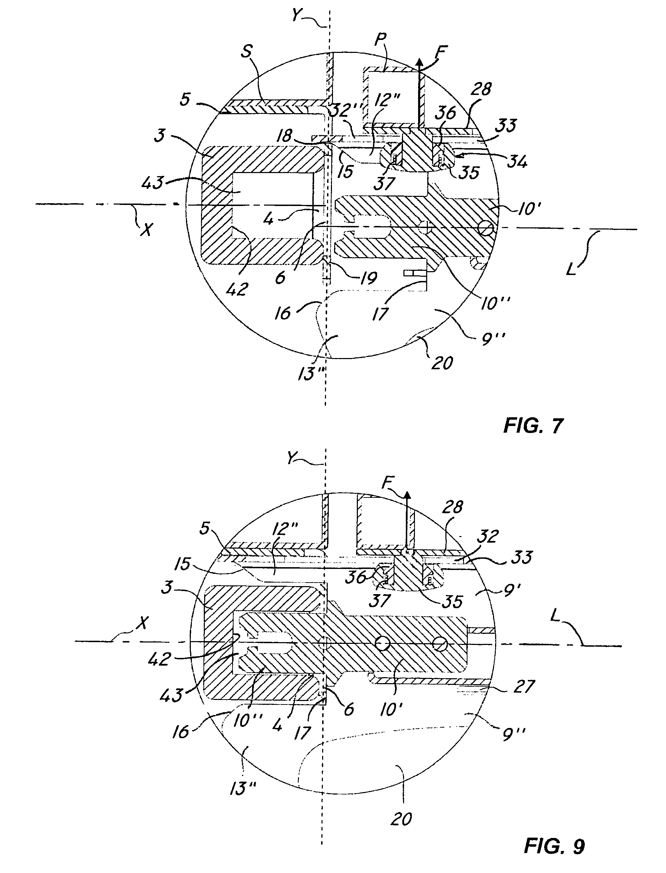

The elastic biasing means 31 may include an elastic member 34 operating in the first transverse direction Y to exert a retention force F on the wall 33, as schematically shown in Fig. 9.

Particularly, the elastic member 34 may be a pin composed of a first hollow body 35 fixed to the bracket 8 and a second hollow body 36, coaxial with and internal to the other, and transversely movable.

A return spring 37 may be interposed between the two bodies 35, 36, and calibrated to exert the retention force F on the second hollow body 36 and press it against the wall 33 of the slide 9.

This will provide a closed structure that will prevent any ingress of foreign particles that might cause malfunctioning of the retention means 31.

The elastic member 34 is slideably engaged in a first longitudinal eyelet 32 formed in the inner vertical wall 33 of the tubular inner portion 9' of the slide 9.

The first longitudinal eyelet 32 may also have enlarged longitudinal ends 32', 32" designed to be engaged by said elastic member 34, when the slide 9 is in a corresponding longitudinal end position.

Advantageously, the first eyelet 32 and the elastic member 34 will be also used to guide the slide 9 in its longitudinal sliding motion.

The vertical inner wall 28 of the bracket 8 may also have a second longitudinally extended eyelet 38 allowing access to the slide 9 from within the work zone. Preferably, the second eyelet 38 will at least partially coincide with the other.

At the second eyelet 38, the slide 9 has a seat 38 for attachment of an auxiliary hand grip 40 mounted from within the barrier to allow a user to move the slide 9 between the two end positions and open the door P from within the work zone.

The auxiliary hand grip 40 may have a threaded or shaped end 41 adapted for removable engagement with the complementarily threaded or shaped seat 39 of the slide 9.

The operation of the assembly 1 may be easily understood from the comparison between Figs. 6 and 8 and the comparison between Figs. 7 and 9.

These figures show that, during the motion from the idle end position to the operating end position, in case of misalignment between the longitudinal axis L of the actuator member 10 and the center axis X of the slot 4 and the slit 6, the guiding means 14 operate in the first transverse direction Y to align the two axes L, X.

Namely, in this case, the guiding action is defined by the first horizontal edges 15, 16 and particularly, as shown, by the first edges 15 associated with the inner appendix 12, which will promote, by sliding, the transverse translational motion of the actuator member 10 in the first transverse direction Y to align it in the slot 4.

In the case, not shown, of misalignment between the axes X, L in a vertical direction, the guiding action will be caused by one of the second vertical edges 15' of the inner appendix 12 or by one of the third vertical edges 190 of the second passage 19 of the flange 5, depending on whether the longitudinal axis L is located internal or external to the center axis X.

In the former case, one of the second edges 15' will slide on the side wall of the first passage 18 to promote the translational motion of the actuator member 10 in the second transverse direction Z and align it with the slot 4.

In the latter case, one of the first horizontal edges 16 of the outer appendix 13 will slide on one of the third edges 190 of the second passage 19, thereby also promoting the translational motion for aligning the actuator member 10 in the second transverse direction Z.

Finally, in the case, also not shown, in which the axes L, X are misaligned both horizontally and vertically, the guiding means 14 will also allow simultaneous alignment in both transverse guiding directions Y, Z.

Such alignment will be ensured by simultaneous or sequential interaction of one of the first edges 15, 16 and one of the second edges 15' with one of the passages 18, 19.

In either case, the actuator member 10 may enter the box-like body 3 through the slot 4 and the slit 6 without hitting any other element and without any damage to its structure.

If misalignment between the two longitudinal axes L, X is so important as to prevent the operation of the guiding means 14, the greater longitudinal length 1', 1" of the appendixes 12, 14 as compared with the projecting portion 10' of the actuator member 10 will prevent the latter from hitting any other element.

The abutment edge 17 will also prevent the actuator member 10 from knocking against the bottom wall 42 of its housing 43 in the box-like body 3 after passing through the slot 4.

The above disclosure clearly shows that the switch assembly 1 of the present invention fulfils the intended objects and particularly meets the requirement of protecting the actuator member 10 from any accidental impact against other components of the assembly 1 or parts of the barrier, while always ensuring perfect guidance of the components.

The assembly 1 also has a highly simple and sturdy structure, with a small number of components, and may be obtained by simple machining in a very small number of assembly steps.

Furthermore, the handle, guide and alignment features of the actuator member 10 are incorporated in a single element, the slide 8, which may be obtained from a single tubular element by simple cutting steps.

The assembly of this invention is susceptible of a number of changes and variants, within the inventive principle disclosed in the appended claims. All the details thereof may be replaced by other technically equivalent parts, and the materials may vary depending on different needs, without departure from the scope of the invention.

While the assembly has been described with particular reference to the accompanying figures, the numerals are only used for the sake of a better intelligibility of the invention and shall not be intended to limit the claimed scope in any manner.

## Claims

1. A handle safety switch assembly for a protection barrier of working areas, wherein the barrier comprises a stationary part (S) designed to delimit a working area of an industrial machine or plant and at least one movable part (P) such as a door or the like for the access to said working area, which assembly comprises:
- switch means (2) designed to be mounted to the stationary part (S) of the barrier;
- actuation means (7) designed to be secured to the movable part (P) of the barrier to interact with said switch means (2) in response to the opening and closing of said movable part (P);
wherein said switch means comprise a box-like body (3) with a flange (5) for anchoring thereof to the stationary part (S) of the protection barrier and a commutation circuit housed in said box-like body (3) and connectable to the power circuit of the industrial
machine or plant located in the working area, said box-like body (3) having at least one slot (4) for allowing the access to said commutation circuit and
defining a respective substantially horizontal longitudinal plane (π");
wherein said actuation means (7) comprise a bracket (8) firmly securable to said movable part (P), guiding means (26) for guiding a slide (9) along a longitudinal direction (L), an actuation member (10) projecting from said slide (9) by a predetermined length (e) along a longitudinal direction (L), said slide (9) being slidably associated to the movable part (P) for moving said actuation member (10) along said longitudinal direction (L) to allow it to cross over said slot (4) for interacting with said commutation circuit;
wherein said slide (9) has a pair of shaped appendixes (12, 13) longitudinally projecting from said actuation member (10) and having corresponding longitudinal extensions (I', I") greater than said predetermined length (e) of said actuation member (10), guiding means (14) being also associated to at least one of said appendixes (12, 13) for guiding said actuation member (10) along at least one first substantially transverse direction (Y) and aligning it with said slot (4);
**characterized in that** said shaped appendixes (12, 13) longitudinally project from opposite sides with respect of said actuation member (10), said flange, said bracket (8) and said slide (9) being substantially symmetrical with respect to their respective substantially horizontal longitudinal planes (π', π") to allow the application of said assembly either to right opening or to left opening doors.

2. Switch assembly as claimed in claim 1, **characterized in that** said guiding means (14) comprise one or more edges (15, 16) associated with at least one of said appendixes (12, 13), each of said edges (15, 16) defining a corresponding sliding plane inclined with respect to said longitudinal direction (L) and designed to interact with said switch means (2) during the longitudinal sliding of said actuation member (10) for guiding this latter along said at least one first guiding direction (Y).

3. Switch assembly as claimed in claim 2, **characterized in that** each of said appendixes (12, 13) has first edges (15, 16) substantially horizontal and converging toward said actuation member (10) for guiding it along a substantially transverse and horizontal first guiding direction (Y).

4. Switch assembly as claimed in claim 2 or 3, **characterized in that** at least one of said appendixes (12, 13) has substantially vertical second edges (15') for guiding said acting member (10) along a substantially transverse and vertical second guiding direction (Z).

5. Switch assembly as claimed in any claim 2 to 4, **characterized in that** said flange (5) is provided with a at least one pair of passages (18, 19) placed in opposite side of said slot (4) and longitudinally alignable to corresponding appendixes (12, 13) for interacting with said first and/or said second edges (15, 16; 15') and allowing the alignment of said actuation member (10) with said slot (4).

6. Switch assembly as claimed in any of the preceding claims, **characterized in that** said slide (9) comprises an inner tubular portion (9') solidal with said actuation member (10) and an outer tubular portion (9") provided with a catching opening (20) having dimension sufficient to allow the introduction of a hand and the handling of said slide (9) by a user.

7. Switch assembly as claimed in any preceding claim, **characterized by** comprising biasing elastic means (31) adapted to exert a substantially transverse biasing force (F) on said slide (9), said biasing force (F) being sufficient to avoid the accidental sliding thereof between said end positions.

8. Switch assembly as claimed in claim 7, **characterized in that** said biasing elastic means (31) comprise an elastic member (34) acting along said first transverse centering direction (Y) to exert said force (F), a first longitudinal eyelet (32) being associated to said inner tubular portion (9') of said slide (9), which first eyelet (32) having enlarged longitudinal ends (32', 32") designed to be engaged with said elastic member (34) when said slide (9) is in one of said end positions.

9. Switch assembly as claimed in claim 8, **characterized in that** said bracket (8) has a vertical inner wall (28) provided with a second eyelet (38) longitudinally elongated to allow the access to said slide (9) from the working area, said slide (9) being provided in correspondence of said second eyelet (38) with a seat (39) for anchoring an auxiliary handle (40) applicable from the working area to allow the sliding of said slide (9) and the opening of the movable part (P) by a user placed inside the barrier.

## Patentansprüche

1. Griffschutzschalteranordnung für eine Schutzabsperrung von Arbeitsbereichen, wobei die Absperrung einen stationären Teil (S) umfasst, der dazu bestimmt ist einen Arbeitsbereich einer industriellen Maschine oder Anlage zu begrenzen und mindestens einen beweglichen Teil (P), wie z. B. eine Tür oder Ähnliches für den Zugang zu einem Arbeitsbereich, wobei die Anordnung umfasst:
Schaltereinrichtungen (2), die dazu bestimmt sind an den stationären Teil (S) der Absperrung montiert zu werden,
Betätigungseinrichtungen (7), die dazu bestimmt sind an dem beweglichen Teil (P) der Absperrung gesichert zu werden, um mit den Schaltereinrichtungen (2) zusammen zu wirken als Reaktion auf das Öffnen oder Schließen des beweglichen Teils (P),
wobei die Schaltereinrichtungen ein kastenartiges Gehäuse (3) umfassen mit einem Flansch (5) zu deren Verankerung mit dem stationären Teil (S) der Schutzabsperrung und einen Schaltkreis, der in dem kastenartigen Gehäuse (3) enthalten ist und verbindbar ist mit dem Leistungsanschluss der industriellen Maschine oder Anlage, die in dem Arbeitsbereich angeordnet ist, wobei das kastenartige Gehäuse (3) mindestens einen Schlitz (4) aufweist, um den Zugang zu dem Leistungsanschluss zu ermöglichen und um eine jeweils im wesentlichen horizontale, longitudinale Ebene (π") zu bestimmen,
wobei die Betätigungseinrichtungen (7) eine Klammer (8) aufweisen, die fest zu sichern ist an dem beweglichen Teil (P), Führungseinrichtungen (26) zum Führen einer Rutsche (9) entlang einer longitudinalen Richtung (L), einem Betätigungselement (10), das von der Rutsche (9) absteht mit einer vorbestimmten Länge (e) entlang einer longitudinalen Richtung (L), wobei die Rutsche (9) dem beweglichen Teil (P) gleitend zugeordnet ist, um das Betätigungselement (10) entlang der longitudinalen Richtung (L) zu bewegen, um es zu ermöglichen, den Schlitz (4) zu überqueren, um mit dem Schaltkreis zusammen zu wirken,
wobei die Rutsche (9) ein Paar geformter Anhänge (12, 13) aufweist, die longitudinal vorstehen von dem Betätigungselement (10) und entsprechend longitudinale Verlängerungen (I', I") haben, die größer sind als die vorbestimmte Länge (e) des Betätigungselements (10), wobei Führungseinrichtungen (14) auch mindestens einem der Anhänge (12, 13) zugeordnet sind zum Führen des Betätigungselements (10) entlang mindestens einer ersten im wesentlichen transversalen Richtung (Y) und zu dessen Ausrichtung mit dem Schlitz (4),
**dadurch gekennzeichnet, dass** diese geformten Anhänge (12, 13) longitudinal vorstehen von entgegengesetzten Seiten mit Bezug auf das Betätigungselement (10), wobei der Flansch, die Klammer (8) und die Rutsche (9) im wesentlichen symmetrisch sind zu ihren jeweiligen im wesentlichen horizontalen, longitudinalen Ebenen (π', π"), um die Anwendung dieser Anordnung entweder auf rechts öffnende oder auf links öffnende Türen anzuwenden.

2. Schalteranordnung gemäß Anspruch 1, **dadurch gekennzeichnet, dass** die Führungseinrichtungen (14) einen oder mehrere Ränder (15, 16) aufweisen, die mindestens einem der Anhänge (12, 13) zugeordnet sind, wobei die Ränder (15, 16) eine entsprechende Rutschebene bestimmen, die geneigt ist mit Bezug auf die longitudinale Richtung (L) und ausgelegt ist mit den Schalteinrichtungen (2) zusammen zu wirken während des longitudinalen Rutschens des Betätigungselements (10) zum Führen des Letzteren entlang der mindestens einen ersten Führungsrichtung (Y).

3. Schalteranordnung gemäß Anspruch 2, **dadurch gekennzeichnet, dass** jede der Anhänge (12, 13) erste Ränder (15, 16) aufweist, die im wesentlichen horizontal sind und zum Betätigungselement (10) konvergieren, um es entlang einer im wesentlichen transversalen und horizontalen ersten Führungsrichtung (Y) zu führen.

4. Schalteranordnung gemäß Ansprüchen 2 oder 3, **dadurch gekennzeichnet, dass** mindestens einer der Anhänge (12, 13) im Wesentlichen vertikale zweite Ränder (15') aufweist, um das Betätigungselement (10) entlang einer im Wesentlichen transversalen und vertikalen zweiten Führungsrichtung (Z) zu führen.

5. Schalteranordnung gemäß Ansprüchen 2 bis 4, **dadurch gekennzeichnet, dass** der Flansch (5) mit mindestens einem Paar von Durchgängen (18, 19) versehen ist, die an gegenüber liegenden Seiten des Schlitzes (4) angeordnet sind und longitudinal ausrichtbar sind mit den entsprechenden Anhängen (12, 13) um zusammen zu wirken mit den ersten und/oder zweiten Rändern (15, 16, 15') und um die Ausrichtung des Betätigungselements (10) mit dem Schlitz (4) zu ermöglichen.

6. Schalteranordnung gemäß einem der vorhergehenden Ansprüche, **dadurch gekennzeichnet, dass** die Rutsche (9) einen inneren Rohrabschnitt (9') aufweist, der einig ist mit dem Betätigungselement (10) und einen äußeren Rohrabschnitt (9"), der mit einer Aufnahmeöffnung (20) versehen ist mit Abmessungen, die ausreichend sind, um die Einführung einer Hand und die Bedienung der Rutsche (9) durch einen Nutzer zu ermöglichen.

7. Schalteranordnung gemäß einem der vorhergehenden Ansprüche, **dadurch gekennzeichnet, dass** vorgespannte Federeinrichtungen (31) vorgesehen sind, die ausgelegt sind eine im Wesentlichen transversale Vorspannkraft (F) auf die Rutsche (9) auszuüben, wobei die Vorspannkraft (F) ausreichend ist, um deren unbeabsichtigtes Gleiten zwischen diesen Endpositionen zu vermeiden.

8. Schalteranordnung gemäß Anspruch 7, **dadurch gekennzeichnet, dass** die vorgespannten Federeinrichtungen (31) ein elastisches Element (34) umfassen, das entlang der ersten transversalen Zentrierrichtung (Y) wirkt, um die Kraft (F) auszuüben, wobei eine erste longitudinale Öse (32) dem inneren Rohrabschnitt (9') der Rutsche (9) zugeordnet ist und die erste Öse (32) aufgeweitete longitudinale Enden (32', 32") hat, die ausgelegt sind, um in das elastische Element (34) einzugreifen, wenn die Rutsche (9) in einer ihrer Endpositionen ist.

9. Schalteranordnung gemäß Anspruch 8, **dadurch gekennzeichnet, dass** die Klammer (8) eine vertikale innere Wand (28) aufweist, die mit einer longitudinal verlängerten, zweiten Öse (38) versehen ist, um den Zugang zu der Rutsche (9) von dem Arbeitsbereich zu ermöglichen, wobei die Rutsche (9) in Entsprechung mit dieser zweiten Öse (38) mit einem Sitz (39) versehen ist zum Verankern eines Hilfsgriffs (40), der anwendbar ist von dem Arbeitsbereich, um das Gleiten der Rutsche (9) zu ermöglichen und das Öffnen des beweglichen Teils (P) durch einen Nutzer, der sich innerhalb der Absperrung befindet.

## Revendications

1. Groupe commutateur de sécurité à poignée pour une barrière de protection de zones de travail, où la barrière comprend une partie fixe (S) conçue pour délimiter une zone de travail d'une machine ou d'une installation industrielle et au moins une partie mobile (P) comme une porte ou similaire pour l'accès à ladite zone de travail, groupe qui comprend :
- un moyen de commutation (2) conçu pour être monté sur la partie fixe (S) de la barrière;
- un moyen d'actionnement (7) conçu pour être fixé à la partie mobile (P) de la barrière pour interagir avec ledit moyen de commutation (2) en réaction à l'ouverture et à la fermeture de ladite partie mobile (P) ;
où ledit moyen de commutation comprend un corps ressemblant à une boîte (3) avec une bride (5) pour l'ancrer à la partie fixe (S) de la barrière de protection et un circuit de commutation logé dans ledit corps ressemblant à une boîte (3) et pouvant être relié au circuit de puissance de la machine ou à l'installation industrielle située dans la zone de travail, ledit corps ressemblant à une boîte (3) ayant au moins une fente (4) pour permettre l'accès audit circuit de commutation et définir un plan longitudinal essentiellement horizontal (π") respectif ;
où ledit moyen d'actionnement (7) comprend un étrier (8) pouvant être fermement fixé à ladite partie mobile (P), un moyen de guidage (26) pour guider une glissière (9) le long d'une direction longitudinale (L), un organe d'actionnement (10) dépassant de ladite glissière (9) d'une longueur prédéterminée (e) le long d'une direction longitudinale (L), ladite glissière (9) étant associée de façon coulissante à la partie mobile (P) pour actionner ledit organe d'actionnement (10) le long de ladite direction longitudinale (L) pour lui permettre de franchir ladite fente (4) pour interagir avec ledit circuit de commutation ;
où ladite glissière (9) présente une paire d'appendices façonnés (12, 13) dépassant longitudinalement dudit organe d'actionnement (10) et ayant des extensions longitudinales correspondantes (I', I") plus grandes que ladite longueur prédéterminée (e) dudit organe d'actionnement (10), le moyen de guidage (14) étant également associé à au moins un des appendices (12, 13) pour guider ledit organe d'actionnement (10) le long d'au moins une première direction essentiellement transversale (Y) et l'aligner sur ladite fente (4) ;
**caractérisé en ce que** lesdits appendices façonnés (12, 13) dépassent longitudinalement des côtés opposés par rapport audit organe d'actionnement (10), ladite bride, ledit étrier (8) et ladite fente (9) étant essentiellement symétriques par rapport à leurs plans longitudinaux essentiellement horizontaux respectifs (π', π") pour permettre l'application dudit groupe sur les portes s'ouvrant à droite ou à gauche.

2. Groupe commutateur selon la revendication 1, **caractérisé en ce que** ledit moyen de guidage (14) comprend un ou plusieurs bords (15, 16) associés à au moins un desdits appendices (12,13), chacun desdits bords (15, 16) définissant un plan de coulissement correspondant incliné par rapport à ladite direction longitudinale (L) et conçus pour interagir avec ledit moyen de commutation (2) durant le coulissement longitudinal dudit organe d'actionnement (10) pour guider ce dernier le long d'au moins une première direction de guidage (Y).

3. Groupe commutateur selon la revendication 2, **caractérisé en ce que** chacun desdits appendices (12, 13) présente des premiers bords (15, 16) essentiellement horizontaux et convergeant vers ledit organe d'actionnement (10) pour le guider le long d'une première direction de guidage essentiellement transversale et horizontale (Y).

4. Groupe commutateur selon la revendication 2 ou 3, **caractérisé en ce qu'**au moins un desdits appendices (12, 13) présente des deuxièmes bords essentiellement verticaux (15') pour guider ledit organe d'actionnement (10) le long d'une deuxième direction de guidage essentiellement transversale et verticale (Z).

5. Groupe commutateur selon l'une des revendications 2 ou 4, **caractérisé en ce que** ladite bride (5) est munie d'au moins d'une paire de passages (18, 19) placés du côté opposé de ladite fente (4) et pouvant être alignée longitudinalement sur les appendices correspondants (12, 13) pour interagir avec lesdits premiers et/ou deuxièmes bords (15, 16 ; 15') et permettre l'alignement dudit organe d'actionnement (10) sur ladite fente (4).

6. Groupe commutateur selon l'une des revendications précédentes **caractérisé en ce que** ladite glissière (9) comprend une portion tubulaire interne (9') solidaire dudit organe d'actionnement (10) et une portion tubulaire externe (9") munie d'une ouverture de captage (20) ayant une dimension suffisante pour permettre l'introduction d'une main et la manipulation de ladite glissière (9) par un utilisateur.

7. Groupe commutateur selon l'une des revendications précédentes, **caractérisé en ce qu'**il comprend un moyen élastique de décentrage (31) indiqué pour exercer une force de décentrage essentiellement transversale (F) sur ladite glissière (9), ladite force de décentrage (F) étant suffisante pour en éviter le coulissement accidentel dé ladite glissière (9), entre lesdites positions terminales.

8. Groupe commutateur selon la revendication 7, **caractérisé en ce que** ledit moyen élastique de décentrage (31) comprend un organe élastique (34) agissant le long de ladite première direction de centrage transversale (Y) pour exercer ladite force (F), un premier oeillet longitudinal (32) étant associé à ladite portion tubulaire interne (9') de ladite glissière (9), le premier oeillet (32) présentant des extrémités longitudinales élargies (32', 32") conçues pour se mettre en prise avec ledit organe élastique (34) lorsque ladite glissière (9) est dans une desdites positions terminales.

9. Groupe commutateur selon la revendication 8, **caractérisé en ce que** ledit étrier (8) présente une paroi interne verticale (28) munie d'un deuxième oeillet (38) longitudinalement allongé pour permettre l'accès à ladite glissière (9) à partir de la zone de travail, ladite glissière (9) étant munie au niveau dudit deuxième oeillet (38) d'un siège (39) pour ancrer une poignée auxiliaire (40) applicable à partir de la zone de travail pour permettre le coulissement de ladite glissière (9) et l'ouverture de la partie mobile (P) de la part d'un utilisateur placé à l'intérieur de la barrière.
